# FASCICULE DE BREVET EUROPEEN

(11) **EP 0 521 135 B1**
(45) Date de publication et mention de la délivrance du brevet: **05.06.1996**
(21) Numéro de dépôt: 92904617.5
(22) Date de dépôt: 23.01.1992
(51) Int. Cl.: A01B 13/08, A01B 35/26, A01B 15/02

(54) **ENGIN DE LABOUR A LAMES HELICOIDALES ET LAMES POUR CET ENGIN**
BODENBEARBEITUNGSMASCHINE MIT SCHRAUBENFÖRMIGEN BLÄTTERN UND BLÄTTER FÜR DIESE MASCHINE
TILLING APPARATUS WITH HELICAL BLADES AND BLADES THEREFOR

(30) Priorité: 23.01.1991 FR 9100731
(43) Date de publication de la demande: 07.01.1993
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel
(86) Numéro de dépôt international: FR9200061
(87) Numéro de publication internationale: WO9212616

(56) Documents cités:
- EP-A- 0 279 761
- AU-B- 2 459 484
- FR-A- 2 627 934
- US-A- 2 320 024
- US-A- 2 569 556
- US-A- 4 817 727

## Description

La présente invention est relative à un engin de labour à lames hélicoïdales et à des lames destinées à de tels engins.

On connaît depuis de nombreuses années des engins de labour comportant des lames en acier sensiblement verticales qui réalisent le labour en étant déplacées dans le sol.

Le brevet allemand 1 020 472 publié le 5 Décembre 1957 décrit en particulier des engins de ce type qui comportent des lames verticales en forme de sabre réalisées en acier à ressort de telle manière qu'elles puissent se déplacer latéralement en fonction des efforts qui leur sont communiqués par le sol labouré.

Décrites dans le brevet français 76 17310 du 4 Juin 1976 (FR-A-2 353 212), des lames planes similaires réalisées en acier à haut degré d'élasticité, présentent un faible rayon de courbure dans le plan vertical et comportent unilatéralement à leur base un soc de forme triangulaire incliné par rapport au plan horizontal. Les vibrations engendrées par cette configuration provoquent une fragmentation du sol.

Le demandeur commercialise depuis 1986 des engins de labour qui comprennent des lames de forme hélicoïdale, c'est-à-dire des lames qui par rapport au plan vertical selon lequel elles se trouvent fixées à leur extrémité supérieure ont une forme telle qu'en se déplaçant progressivement vers le bas, la lame s'écarte de plus en plus de ce plan vertical en faisant avec lui un angle croissant. Ces lames hélicoïdales matérialisent l'état de la technique à partir duquel la présente invention a été réalisée et comportent les caractéristiques du préambule de la revendication 1.

Les engins de ce type connu comportent une série de lames qui sont écartées latéralement les unes des autres d'environ quarante centimètres et qui, vues de dessus, sont disposées en triangle.

La présente invention est relative à des lames et à des engins de labour de ce dernier type qui présentent l'avantage d'être d'un mode de réalisation plus simple, sont plus économiques à l'usage tout en réalisant un labour du même niveau de qualité.

La présente invention a pour objet une lame hélicoïdale pour engin de labour qui, par rapport au plan vertical selon lequel elle est fixée à l'engin de labour à son extrémité supérieure, possède une forme telle qu'en se déplaçant progressivement vers le bas, la lame s'écarte de plus en plus de ce plan vertical en faisant avec lui un angle croissant, caractérisé par le fait que la lame comporte, au voisinage de son extrémité inférieure, et du côté convexe, un ergot ou aileron dirigé du côté opposé à l'extrémité inférieure de la lame.

Conformément à l'invention, l'ergot se présente avantageusement sous la forme d'un triangle curviligne dont un des côtés est solidaire de la lame hélicoïdale et dont un autre côté formant bord d'attaque qui est situé en direction de l'avancement de l'engin de labour est incliné vers l'arrière par rapport à la lame.

Selon un mode de réalisation préféré de l'invention, le plan de l'ergot présente à partir de la lame un dièdre négatif d'environ 30°, l'ergot présentant en direction d'avancement de l'engin une pente vers l'avant d'environ 15°.

Selon un premier mode de réalisation particulier de l'invention, l'ergot, ou aileron, est directement soudé à l'extrémité inférieure de la lame.

Dans un deuxième mode de réalisation particulier de l'invention, la partie inférieure de la lame est rapportée sur le corps de la lame à la manière connue par des boulons tandis que l'ergot, ou aileron, est soudé sur la partie inférieure de la lame ainsi rapportée.

Dans un troisième mode de réalisation particulier de l'invention, la partie inférieure rapportée sur le corps de la lame présente à son extrémité arrière une surface repliée qui constitue l'ergot, cette partie inférieure pouvant être obtenue directement par forgeage ou estampage.

On peut également, si on le désire protéger la partie inférieure de l'arête de la lame par une pièce d'usure comportant par exemple des éléments en carbure de tungstène.

La présente invention a également pour objet des engins de labour caractérisés par le fait qu'ils comportent les lames hélicoïdales définies ci-dessus.

Les engins de labour selon l'invention présentent l'avantage de permettre une réduction importante du nombre de lames pour une largeur de labour donnée.

C'est ainsi qu'avec les lames hélicoïdales conventionnelles, il est nécessaire d'espacer latéralement lesdites lames d'environ 40 centimètres alors qu'avec les lames munies de l'ergot, ou aileron, selon l'invention, les lames peuvent être espacées latéralement de 70 à 80 centimètres.

Il en résulte, indépendamment d'un moindre coût de l'engin, une économie dans la puissance de traction ou encore pour un tracteur donné, la possibilité de réaliser à chaque passe une largeur de labour d'une fois et demi à deux fois plus importante.

De surcroît, le fait d'avoir des lames plus espacées limite les risques de bourrage du fait que les végétaux subsistant sur le terrain labouré peuvent s'écouler plus facilement entre les lames.

Par ailleurs, dans la plupart de leurs utilisations, les lames selon l'invention peuvent être disposées sur l'engin de labour côte à côte selon une même ligne droite perpendiculaire à l'avancement du tracteur ou selon un V beaucoup plus ouvert que le V selon lequel sont disposées les lames hélicoïdales connues actuellement.

Enfin, la présence de l'ergot, ou aileron, au bas de la lame a pour effet, lors du labour, de créer un effort latéral qui s'oppose aux forces exercées par la terre sur la partie inférieure de la lame hélicoïdale de sorte que pour garder sa rigidité la partie supérieure de la lame n'a pas besoin d'être réalisée en acier aussi épais.

De plus, du fait qu'il s'exerce moins d'efforts latéraux sur chaque lame, il est possible de réaliser le châssis de l'engin de labour d'une manière plus légère et donc plus économique.

Dans le but de mieux faire comprendre l'invention, on va en décrire maintenant à titre d'illustration et sans aucun caractère limitatif, plusieurs modes de réalisation pris comme exemples et représentés sur le dessin annexé.

Sur ce dernier,
- la figure 1 est une vue schématique en perspective d'un premier mode de réalisation d'une lame hélicoïdale munie d'un ergot, ou aileron, selon l'invention,
- la figure 2 est une vue de face à plus grande échelle de la partie inférieure de la figure 1,
- la figure 3 est une vue de dessus en coupe selon III-III de la figure 1.
- la figure 4 est une vue en perspective d'un deuxième mode de réalisation de la lame de la figure 1,
- la figure 5 est une vue en perspective d'un troisième mode de réalisation de la lame de la figure 1.

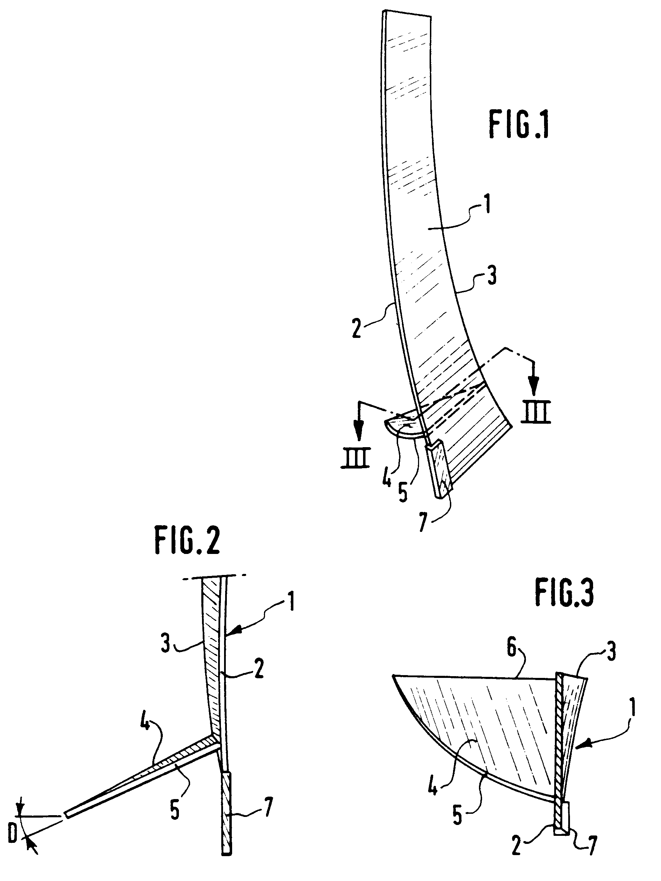

On a représenté sur la figure 1, une vue en perspective d'un premier mode de réalisation de l'invention.

Ce mode de réalisation comporte une lame hélicoïdale 1 de type connu qui présente un bord d'attaque avant 2 qui s'écarte progressivement en allant vers le bas du plan vertical selon lequel la partie supérieure de la lame 1 est fixée sur l'engin de labour.

Le bord de fuite 3 s'écarte également du plan vertical dans lequel est fixée la partie supérieure de la lame 1 mais d'une manière plus rapide que ne le fait le bord d'attaque 2.

Il en résulte que les lignes horizontales qui réunissent le bord d'attaque 2 au bord de fuite 3 de la lame forme au fur et à mesure que l'on se déplace vers le bas de la lame un angle de plus en plus grand avec le plan vertical de la partie supérieure de la lame. C'est ce qui donne à la lame 1 sa forme hélicoïdale connue.

Conformément à l'invention, un ergot, ou aileron 4, est soudé à la partie inférieure de la lame du côté convexe de celle-ci.

On retrouve sur les figures 2 et 3 qui sont des vues à plus grande échelle de la partie inférieure de la lame de la figure 1, le bord d'attaque 2 de la lame et son bord de fuite 3 ainsi que l'ergot ou aileron 4 qui, conformément à un mode de réalisation préféré de l'invention a sensiblement la forme d'un triangle curviligne dont le bord d'attaque 5 dirigé vers l'avant de l'engin de labour est incliné par rapport à la direction de la lame d'environ 45° comme on peut le voir sur la figure 3.

Conformément à un mode de réalisation particulier de l'invention, vu de face comme sur la figure 2, le plan de l'ergot présente un dièdre D négatif d'environ 30°.

Conformément à un mode de réalisation particulier de l'invention, le bord d'attaque 5 de l'ergot 4 est légèrement inférieur au bord de fuite 6 de manière à ce que la ligne de raccordement de l'ergot 4 sur la lame 1 fasse vers le bas un angle relativement faible par exemple de 10 à 20°.

On a également représenté sur les figures 1, 2 et 3 comment une plaque d'usure 7 peut être rapportée à la partie inférieure de la lame 1 sans pour cela modifier sensiblement les caractéristiques géométriques de cette lame.

Cette plaque d'usure 7 peut être par exemple munie de pastilles en carbure de tungstène et être rapportée sur la lame 1 par vissage ou par soudage.

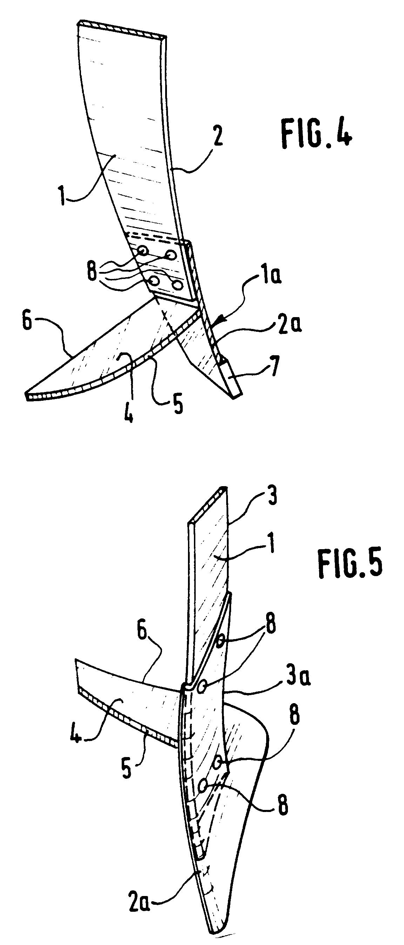

On a représenté sur la figure 4 un deuxième mode de réalisation de la lame selon l'invention.

On retrouve sur la figure 4 la partie supérieure du corps de la lame hélicoïdale 1 sur laquelle on a fixé une partie inférieure 1a à l'aide de boulons 8 schématiquement représentés sur le dessin.

De cette manière, la partie 1a assure le prolongement de la lame 1 vers le bas, en lui conservant sensiblement la même forme.

Dans ce mode de réalisation, l'ergot 4 est fixé par soudure sur la partie inférieure 1a de la lame. L'ergot 4 peut présenter les mêmes caractéristiques que celles qui ont été définies ci-dessus au sujet des figures 1 à 3.

L'extrémité inférieure du bord d'attaque 2a de la partie inférieure 1a de la lame peut être également protégée par une pièce d'usure 7 rapportée comme il était indiqué ci-dessus.

Ce mode de réalisation présente l'avantage de pouvoir facilement remplacer la partie inférieure de la lame qui s'use le plus rapidement.

De surcroît, ce mode de réalisation permet de transformer les lames hélicoïdales déjà existantes, simplement en coupant leur partie inférieure pour recevoir la partie inférieure 1a qui a été décrite en référence à la figure 4.

La figure 5 représente une perspective vue d'en haut et de l'avant d'un troisième mode de réalisation de l'invention dans lequel, comme pour le cas du mode de réalisation de la figure 4, on a rapporté par des boulons 8 une pièce 1a qui constitue à la fois la partie inférieure de la lame 1 et l'ergot, ou aileron, 4.

Pour réaliser cette pièce, on part d'une plaque de tôle d'acier 1a dont la largeur est sensiblement plus grande que celle de la lame 1 et dont la hauteur est plus importante que sur la figure 4.

Conformément à l'invention, cette plaque 1a est découpée selon une ligne 3a qui correspond au bord de fuite 3 de la lame 1 après quoi l'on replie vers le bas du côté convexe de la lame 1 la partie ainsi découpée qui vient constituer l'ergot, ou aileron, 4, la découpe 3a constituant le bord d'attaque 5 de l'ergot tandis que l'extrémité arrière de la pièce rapportée 1 a constitue le bord de fuite 6 de l'ergot.

On voit que grâce à ce mode de réalisation, on peut obtenir directement par forgeage ou estampage la pièce qui, fixée à la partie inférieure de la lame 1 permet de réaliser l'invention.

Dans une variante préférée de ce mode de réalisation, la plaque d'acier 1a est repliée en 2a pour protéger l'extrémité inférieure de la lame 1 et pour constituer le bord d'attaque qui est soumis à la plus grande usure.

Bien entendu, il est également possible de prévoir dans ce mode de réalisation, une pièce d'usure 7 pour l'extrémité inférieure de la lame comme cela a été décrit dans les modes de réalisation précédents.

Les engins de labour comportant des lames selon l'invention sont réalisés à la manière connue de façon à maintenir une pluralité de lames sur un châssis, les parties supérieures des lames étant disposées parallèlement entre elles dans la direction d'avancement de l'engin de labour.

Conformément à un mode de réalisation particulier de l'invention, les lames peuvent être disposées vues de dessus selon un V dont la pointe est dirigée vers l'avant et lorsque la nature du sol le permet selon un V très ouvert ou même une ligne droite perpendiculaire à la direction de travail de l'engin.

Conformément à l'invention, il est avantageux d'utiliser sur l'engin de labour deux types de lames symétriques les unes par rapport aux autres, c'est-à-dire certaines des lames ayant leur extrémité dirigée vers la droite tandis que les autres ont leur extrémité vers la gauche, un type de lame étant disposé sur la partie droite de l'engin de labour tandis que l'autre type de lame est disposé sur la partie gauche de manière à compenser les efforts latéraux que le terrain peut exercer sur l'engin de labour.

Il est bien entendu que les modes de réalisation qui ont été décrits ci-dessus ne présentent aucun caractère limitatif et qu'ils pourront recevoir toute modification désirable sans sortir pour cela du cadre de l'invention telle que définie par les revendications.

## Revendications

1. Lame hélicoïdale (1) pour engin de labour qui, par rapport au plan vertical selon lequel elle est apte à être fixée à l'engin de labour à son extrémité supérieure, possède une forme telle qu'en se déplaçant progressivement vers le bas, la lame (1) s'écarte de plus en plus de ce plan vertical en faisant avec lui un angle croissant, caractérisée par le fait que la lame (1) comporte, au voisinage de son extrémité inférieure, et du côté convexe, un ergot ou aileron (4) dirigé du côté opposé à l'extrémité inférieure de la lame.

2. Lame selon la revendication 1, caractérisée par le fait que l'ergot (4) présente la forme d'un triangle curviligne dont un des côtés est solidaire de la lame hélicoïdale (1) et dont un autre côté (5) formant bord d'attaque en étant situé en direction de l'avancement de l'engin de labour est incliné vers l'arrière par rapport à la lame.

3. Lame selon l'une quelconque des revendications précédentes, caractérisée par le fait que le plan de l'ergot (4) présente avec la partie inférieure de la lame un angle d'environ 60°.

4. Lame selon l'une quelconque des revendications précédentes, caractérisée par le fait que l'ergot (4) présente en direction de l'avancement de l'engin une pente vers le bas d'environ 10° à 20°.

5. Lame selon l'une quelconque des revendications précédentes, caractérisée par le fait que l'ergot (4) est directement soudé à l'extrémité inférieure de la lame (1).

6. Lame selon l'une quelconque des revendications 1 à 4, caractérisée par le fait que la partie inférieure (1a) de la lame (1) est rapportée sur le corps de la lame (1) par un moyen tel que des boulons (8) tandis que l'ergot (4) est soudé sur la partie inférieure (1a) ainsi rapportée.

7. Lame selon l'une quelconque des revendications 1 à 4, caractérisée par le fait que la partie inférieure (1a) de la lame est rapportée sur le corps de la lame et qu'elle présente à son extrémité arrière une surface repliée constituant l'ergot (4).

8. Lame selon la revendication 7, caractérisée par le fait que la partie inférieure (1a) est obtenue par découpage et forgeage ou estampage d'une plaque de tôle.

9. Lame selon l'une quelconque des revendications 7 et 8, caractérisée par le fait que l'arête avant (2a) de la pièce rapportée (1a) est repliée pour protéger l'arête avant (2) de la lame (1).

10. Lame selon l'une quelconque des revendications précédentes, caractérisée par le fait qu'elle comporte une pièce d'usure (7) à la partie inférieure de son arête (2,2a).

11. Engin de labour, caractérisé par le fait qu'il comporte plusieurs lames hélicoïdales selon au moins une des revendications précédentes.

12. Engin selon la revendication 11, caractérisé par le fait qu'il comporte des lames hélicoïdales dont la pointe est dirigée vers la droite et des lames hélicoïdales dont la pointe est dirigée vers la gauche.

13. Engin de labour selon l'une des revendications 11 et 12, caractérisé par le fait que vues de dessus, les lames hélicoïdales sont disposées selon un V dont la pointe est dirigée vers l'avant de l'engin.

14. Engin de labour selon l'une des revendications 11 et 12, caractérisé par le fait que vues de dessus, les lames sont disposées sensiblement selon une droite perpendiculaire à la direction du labour.

15. Engin selon l'une quelconque des revendications 11 à 14, caractérisé par le fait que les lames sont espacées latéralement d'environ 70 à 80 cm.

## Claims

1. Helical blade (1) for ploughing implement, which blade, with respect to the vertical plane according to which it can be attached to the ploughing implement at its upper end, has a shape such that moving progressively downward: the blade (1) moves further and further away from this vertical plane, forming an increasing angle with it, characterised in that the blade (1) includes, close to its lower end, and on the convex side, a lug or flap (4) pointing in the opposite direction to the lower end of the blade.

2. Blade according to Claim 1, characterized in that the lug (4) has the shape of a curved triangle, one of the sides of which is secured to the helical blade (1), and another side (5) of which, forming the leading edge and being situated in the direction of forward travel of the ploughing implement, is inclined backwards with respect to the blade.

3. Blade according to any one of the preceding claims, characterized in that the plane of the lug (4) makes an angle of approximately 60° with the lower part of the blade.

4. Blade according to any one of the preceding claims, characterized in that the lug (4), in the direction of forward travel of the implement, exhibits a downwards slope of approximately 10° to 20°.

5. Blade according to any one of the preceding claims, characterized in that the lug (4) is welded directly to the lower end of the blade (1).

6. Blade according to any one of Claims 1 to 4, characterized in that the lower part (1a) of the blade (1) is attached to the body of the blade (1) by a means such as bolts (8), whereas the lug (4) is welded to the lower part (1a) thus attached.

7. Blade according to any one of Claims 1 to 4, characterized in that the lower part (1a) of the blade is attached to the body of the blade and that it has a bent-over surface constituting the lug (4) at its rear end.

8. Blade according to Claim 7, characterized in that the lower part (1a) is obtained by cutting and forging or stamping a metal sheet.

9. Blade according to either one of Claims 7 and 8, characterized in that the front cutting edge (2a) of the attached piece (1a) is bent over to protect the front cutting edge (2) of the blade (1).

10. Blade according to any one of the preceding claims, characterized in that it includes a wearing piece (7) at the lower part of its cutting edge (2, 2a).

11. Ploughing implement, characterized in that it includes several helical blades according to at least one of the preceding claims.

12. Implement according to Claim 11, characterized in that it includes helical blades, the tips of which point to the right and helical blades the tips of which point to the left.

13. Ploughing implement according to one of Claims 11 and 12, characterized in that, viewed from above, the helical blades are arranged in a V, the tip of which points towards the front of the implement.

14. Ploughing implement according to one of claims 11 and 12, characterized in that, viewed from above, the blades are arranged substantially in a straight line perpendicular to the direction of ploughing.

15. Implement according to any one of Claims 11 to 14, characterized in that the blades have a lateral spacing of approximately 70 to 80 cm.

## Patentansprüche

1. Schraubenförmiges Blatt (1) für Bearbeitungsmaschinen, das in bezug auf die vertikale Ebene, in der es mit seinem oberen Ende an der Bearbeitungsmaschine zu befestigen ist, eine solche Form aufweist, daß es sich nach unten hin zunehmend von dieser vertikalen Ebene entfernt und mit dieser einen zunehmenden Winkel bildet, dadurch **gekennzeichnet**, daß das Blatt (1) in der Nähe seines unteren Endes und auf der konvexen Seite einen Nocken oder Flügel (4) aufweist, der zu der dem unteren Ende des Blattes entgegengesetzten Seite gerichtet ist.

2. Blatt nach Anspruch 1, dadurch **gekennzeichnet,** daß der Nocken (4) die Form eines krummlinigen Dreiecks hat, dessen eine Seite mit dem schraubenförmigen Blatt (1) verbunden ist und dessen die Arbeitskante bildende andere Seite (5), die in Fortbewegungsrichtung der Bearbeitungsmaschine liegt, in bezug auf das Blatt nach hinten geneigt ist.

3. Blatt nach einem der vorstehenden Ansprüche, dadurch **gekennzeichnet,** daß der Nocken (4) mit dem unteren Teil des Blattes einen Winkel von etwa 60° bildet.

4. Blatt nach einem der vorstehenden Ansprüche, dadurch **gekennzeichnet,** daß der Nocken (4) in Fortbewegungsrichtung der Maschine ein Gefälle von etwa 10° bis 20° aufeist.

5. Blatt nach einem der vorstehenden Ansprüche, dadurch **gekennzeichnet,** daß der Nocken (4) direkt an das untere Ende des Blattes (1) angeschweißt ist.

6. Blatt nach einem der Ansprüche 1 bis 4, dadurch **gekennzeichnet**, daß der untere Teil (1a) des Blattes (1) durch Mittel wie etwa Schrauben (8) an den Körper des Blattes (1) angesetzt Ist, wahrend der Nocken (4) an den so angesetzten unteren Teil (1a) angeschweißt ist.

7. Blatt nach einem der Ansprüche 1 bis 4, dadurch **gekennzeichnet**, daß der untere Teil (1a) des Blattes an den Körper des Blattes angesetzt ist und daß er an seinem hinteren Ende eine umgebogene Fläche aufweist, die den Nocken (4) bildet.

8. Blatt nach Ansprüche 7, dadurch **gekennzeichnet,** daß der untere Teil (1a) durch Zuschneiden und Schmieden oder Stanzen einer Blechtafel erhalten ist.

9. Blatt nach Ansprüche 7 oder 8, dadurch **gekennzeichnet,** daß die vordere Kante (2a) des angesetzten Teils (1a) umgebogen ist, um die vordere Kante (2) des Blattes (1) zu schützen.

10. Blatt nach einem der vorstehenden Ansprüche, dadurch **gekennzeichnet,** daß es ein Verschleißteil (7) am unteren Teil seiner Kante (2, 2a) aufweist.

11. Bearbeitungsmaschine, dadurch **gekennzeichnet,** daß sie mehrere schraubenförmige Blätter nach wenigstens einem der vorstehenden Ansprüche aufweist.

12. Bearbeitungsmaschine nach Ansprüche 11, dadurch **gekennzeichnet,** daß sie schraubenförmige Blätter mit nach rechts weisender Spitze und solche mit nach links weisender Spitze aufweist.

13. Bearbeitungsmaschine nach Anspruch 11 oder 12, dadurch **gekennzeichnet**, daß die schraubenförmigen Blätter von oben gesehen in der Form eines V angeordnet sind, dessen Spitze in bezug auf die Maschine nach vorn weist.

14. Bearbeitungsmaschine nach Anspruch 11 oder 12, dadurch **gekennzeichnet**, daß die Blätter von oben gesehen im wesentlichen auf einer zur Arbeitsrichtung senkrechten Geraden angeordnet sind.

15. Maschine nach einem der Ansprüche 11 bis 14. dadurch **gekennzeichnet**, daß die Blätter seitlich um etwa 70 bis 80 cm beabstandet sind.
